# EUROPEAN PATENT APPLICATION

(11) **EP 4 661 099 A1**
(43) Date of publication of application: **10.12.2025**
(21) Application number: 24809195.1
(22) Date of filing: 31.10.2024
(51) Int. Cl.: H01M 4/36, C01G 53/50

(54) **POSITIVE ELECTRODE MATERIAL AND PREPARATION METHOD THEREFOR, POSITIVE ELECTRODE SHEET AND SECONDARY BATTERY**

(30) Priority: 26.03.2024 CN 202410353403
(71) Applicant: Tianjin B&M Science And Technology Co., Ltd., Tianjin 300384 (CN)
(72) Inventor: CHEN, Zhiyu, Tianjin 300384 (CN); JI, Changyin, Tianjin 300384 (CN); LV, Fei, Tianjin 300384 (CN); XU, Ning, Tianjin 300384 (CN)
(74) Representative: Meroni, Francesca
(86) International application number: PCT/CN2024/129077
(87) International publication number: WO 2025/200449

(57) **Abstract**

The present application relates to a cathode material and a preparation method therefor, a cathode plate and a secondary battery. The cathode material includes an inner core and a coating layer coated on at least part of a surface of the inner core, wherein the inner core includes a material with a chemical formula LiNiₐCo_{b}Mn_{c}Q_{d}O₂, where Q element includes at least one of Zr and Al, 0.89≤a≤0.98, 0≤b≤0.06, 0≤c<0.11, d>0, and a+b+c+d=1, and the coating layer includes a material with a chemical formula LiₘCoₙX₍₁₋ₙ₎O₂, where X element includes at least one of Al, W, Ti, B and La, 0<m≤1, and 0<n≤1. With such design, rate performance and cycle performance of the cathode material are effectively improved.

## Description

### CROSS-REFERENCE TO RELATED APPLICATION

The present application claims the priority to the Chinese patent application with the filing No. 202410353403.8 filed with the China National Intellectual Property Administration on March 26, 2024, and entitled "CATHODE MATERIAL AND PREPARATION METHOD THEREFOR, CATHODE PLATE AND SECONDARY BATTERY", the contents of which are incorporated herein by reference in entirety.

### TECHNICAL FIELD

The present application relates to the technical field of batteries, and particularly to a cathode material and a preparation method therefor, a cathode plate and a secondary battery.

### BACKGROUND ART

The rapid development and application of lithium-ion batteries make market demands of automobiles tend to be clear, that is, low-end vehicle models attach importance to competitive cost advantage, and high-end vehicle models pay more attention to endurance mileage. In order to improve the endurance mileage, the high-end vehicle models usually select a cathode material with a high energy density. An increase in nickel element content in the cathode material maximizes specific capacity of the material, but a content of Co element in the cathode material is thereby reduced, causing problems such as deterioration in rate performance and high-temperature cycle performance of the cathode material.

### SUMMARY

The present application provides a cathode material and a preparation method therefor, a cathode plate and a secondary battery, aiming at improving rate performance and high-temperature cycle performance of the cathode material.

In the first aspect of the present application, a cathode material is provided, including an inner core and a coating layer coated on at least part of a surface of the inner core, where the inner core includes a material with a chemical formula LiNiₐCo_{b}Mn_{c}Q_{d}O₂, where Q element includes at least one of Zr and Al, 0.89≤a≤0.98, 0≤b≤0.06, 0≤c<0.11, d>0, and a+b+c+d=1, and the coating layer includes a material with a chemical formula LiₙCoₙX₍₁₋ₙ₎O₂, where X element includes at least one of Al, W, Ti, B and La, 0<m≤1, and 0<n≤1.

In some embodiments, the Q element further includes at least one of Sr, Ti, Sb, W, Nb, Y, Mo, Ta, La, B, P and S.

In some embodiments, (1-n)/n<0.2.

In some embodiments, the coating layer further includes a material with a chemical formula Li_{m'}X'O₂, where the X' element includes at least one of Al, W, Ti, B and La, and 0<m'≤1.

In some embodiments, the cathode material includes monocrystalline particles, where an inner core of the monocrystalline particles includes a material with a chemical formula LiNiₐ₁Co_{b1}Mn_{c1}Q1_{d1}Q2_{d2}O₂, where Q1 element includes Zr, Q2 element includes at least one of Al, Sr, W, Nb, La and Sb, 0.89≤a1≤0.98, 0≤b1≤0.06, 0≤c1<0.11, d1>0, d2≥0, and a1+b1+c1+d1+d2=1; and

a coating layer of the monocrystalline particles includes a material with a chemical formula Liₘ₁Coₙ₁X1₍₁₋ₙ₁₎O₂, where X1 element includes at least one of Al, W, Ti and B, 0<m1≤1, and 0<n1≤1.

In some embodiments, a volume average particle size Dv50 of the monocrystalline particles is 2 µm-6 µm.

In some embodiments, the inner core of the monocrystalline particles contains the Q2 element, and a molar ratio of the Q1 element to the Q2 element in the inner core of the monocrystalline particles is (1-6):1, optionally (1-5):1.

In some embodiments, a sum of mass contents of the Q1 element and the Q2 element in the inner core of the monocrystalline particles is 3,000 ppm-6,000 ppm.

In some embodiments, (1-n1)/n1<0.2.

In some embodiments, a mass content of a Co element in the monocrystalline particles is ≤8%, optionally ≤6%.

In some embodiments, the coating layer of the monocrystalline particles further includes a material with a chemical formula LiX2O₂, where X2 element includes at least one of Al, W, Ti and B.

In some embodiments, a sum of mass contents of Co element and the X2 element in the coating layer of the monocrystalline particles is 0.5%-3%.

In some embodiments, the cathode material further includes polycrystalline particles.

In some embodiments, a ratio of a volume average particle size Dv50 of the polycrystalline particles to the volume average particle size Dv50 of the monocrystalline particles is (3-5.5):1.

In some embodiments, a mass of the monocrystalline particles accounts for 20%-80% of the cathode material.

In some embodiments, the volume average particle size Dv50 of the polycrystalline particles is 9 µm-15 µm.

In some embodiments, an inner core of the polycrystalline particles includes a material with a chemical formula LiNiₐ₂Co_{b2}Mn_{c2}Q3_{d3}Q4_{d4}O₂, where Q3 element includes Al, Q4 element includes at least one of Zr, Sr, Sb, W, Y, Ta, Nb, B, P and S, 0.89≤a2≤0.98, 0≤b2≤0.06, 0≤c2<0.11, d3>0, d4≥0, and a2+b2+c2+d3+d4=1; and
a coating layer of the polycrystalline particles includes a material with a chemical formula Liₘ₂X3ₙ₂X4₍₁₋ₙ₂₎O₂, where X3 element includes B, X4 element includes at least one of Al, W, Ti and La, 0<m2≤1, and 0<n2<1.

In some embodiments, based on a mass of the polycrystalline particles, a mass content of the coating layer of the polycrystalline particles is 0.1%-0.5%.

In some embodiments, the inner core of the polycrystalline particles contains Q4 element, and a molar ratio of Q3 element to the Q4 element in the inner core of the polycrystalline particles is (0.22-5):1, optionally (0.22-4):1.

In some embodiments, a sum of mass contents of the Q3 element and the Q4 element in the inner core of the polycrystalline particles is 3,500 ppm-12,000 ppm.

In some embodiments, a mass ratio of the X3 element to the X4 element in the coating layer of the polycrystalline particles is (0.25-3):1, optionally (0.25-2):1.

In the second aspect of the present application, a preparation method for a cathode material is provided, including steps of:
mixing a cathode material precursor, a lithium source and a Q element-containing compound, and performing first calcination to obtain an inner core, where the Q element includes at least one of Zr and Al; and
mixing the inner core with an X element-containing compound, and performing second calcination, to form a coating layer on at least part of a surface of the inner core, to obtain the cathode material, where the X element includes at least one of Al, W, Ti, B and La,
where the cathode material includes the inner core and the coating layer, the inner core includes a material with a chemical formula LiNiₐCo_{b}Mn_{c}Q_{d}O₂, where 0.89≤a≤0.98, 0≤b≤0.06, 0≤c<0.11, d>0, and a+b+c+d=1, and the coating layer includes a material with a chemical formula LiₘCoₙX₍₁₋ₙ₎O₂, where 0<m≤1, and 0<n≤1.

In the third aspect of the present application, a cathode plate is provided, including at least one of the cathode material according to the first aspect of the present application and a cathode material prepared by the preparation method according to the second aspect of the present application.

In the fourth aspect of the present application, a secondary battery is provided, including the cathode plate according to the third aspect of the present application.

Compared with prior art, the above cathode material and the preparation method therefor, the cathode plate and the secondary battery at least have advantages as follows.

The Q element in the inner core of the cathode material can improve oxygen-fixation ability of a transition metal layer of the cathode material, so that structural stability of the cathode material can be improved; the material with the chemical formula LiₘCoₙX₍₁₋ₙ₎O₂ in the coating layer can form a Li⁺ fast transmission region and an interface stabilization region on the surface of the inner core, enhance interface stability of the cathode material, and reduce corrosion and damage to the cathode material by substances such as HF in an electrolytic solution in an early stage of battery charging and discharging. Therefore, the inner core and the coating layer in the cathode material can cooperate with each other, and effectively improve the rate performance and the high-temperature cycle performance of the cathode material.

### BRIEF DESCRIPTION OF DRAWINGS

FIG. 1 is a scanning electron microscope (SEM) image of a cathode material prepared in Example 1-1 of the present application.
FIG. 2 is an X-ray diffraction (XRD) chart of the cathode material prepared in Example 1-1 of the present application.
FIG. 3 is a comparison chart of high-temperature cycle performances of batteries of Example 1-1, Comparative Example 1-1, Comparative Example 2-1 and Comparative Example 3-1 in the present application.

### DETAILED DESCRIPTION OF EMBODIMENTS

In order to make the above objectives, features and advantages of the present application more apparent and more understandable, embodiments of the present application will be described in detail below. In the following description, many specific details are set forth in order to fully understand the present application. However, the present application can be implemented in many other modes different from those described herein. The skilled in the art could make similar improvements without departing from connotation of the present application. Therefore, the present application is not limited to specific examples disclosed below.

In the present application, "first aspect", "second aspect", "third aspect", etc. are merely used for descriptive purpose, but should not be construed as indicating or implying importance in the relativity or quantity, or implicitly indicating importance or quantity of a related technical feature. Moreover, "first", "second", "third" and the like are merely for the purpose of non-exhaustive enumeration and description, and should be understood as not constituting closed limitation to the quantity.

In the present application, "optionally", "optional", and "option" means dispensable, in other words, either of two parallel solutions of "presence" and "absence" is selected. If "optionally" appears multiple times in a technical solution, each "optionally" is independent from each other, unless specially indicated, and without contradiction or mutual restriction relationship.

In the present application, for a numerical interval involved, unless specially indicated, the numerical interval is considered continuous, and includes minimum and maximum values of the range, as well as each value between such minimum and maximum values. Further, when a range refers to integers, each integer between the minimum and maximum values of this range is included. Furthermore, when a number of ranges are provided to describe a feature or characteristic, the ranges can be combined. In other words, unless otherwise indicated, all ranges disclosed herein should be construed as including any and all subranges included therein.

In the present application, a technical feature described in an open manner includes a closed technical solution composed of the listed features, and also includes an open technical solution containing the listed features.

Unless otherwise defined, all of the technical and scientific terms used in the present application have the same meanings as those generally understood by the skilled in the art of the present application. The terms used herein in the description of the present application are only for the purpose of describing specific examples in the present application, but are not intended to limit the present application. The term "and/or" used in the present application includes any and all combinations of one or more related items listed. The term "a plurality of (multiple)" in the present application means at least two, for example, two, three, or the like, unless explicitly defined otherwise.

An embodiment of the present application provides a cathode material, including an inner core and a coating layer coated on at least part of a surface of the inner core, where the inner core includes a material with a chemical formula LiNiₐCo_{b}Mn_{c}Q_{d}O₂, where Q element includes at least one of Zr and Al, 0.89≤a≤0.98, 0≤b≤0.06, 0≤c<0.11, d>0, and a+b+c+d=1, and the coating layer includes a material with a chemical formula LiₙCoₙX₍₁₋ₙ₎O₂, where X element includes at least one of Al, W, Ti, B and La, 0<m≤1, and 0<n≤1.

When d is 0, a transmission rate of Li⁺ in the material with the chemical formula LiNiₐCo_{b}Mn_{c}O₂ is very low, and this material has poor structural stability under high-temperature conditions, thus greatly restricting exhibition of rate performance and high-temperature cycle performance of the material. In the above embodiment, the Q element in the inner core can improve oxygen-fixation ability of a transition metal layer of the cathode material, so that the structural stability of the cathode material can be improved; the material with the chemical formula LiₘCoₙX₍₁₋ₙ₎O₂ in the coating layer can form a Li⁺ fast transmission region and an interface stabilization region on the surface of the inner core, enhance interface stability of the cathode material, and reduce corrosion and damage to the cathode material by substances such as HF in an electrolytic solution in an early stage of battery charging and discharging. Therefore, the inner core and the coating layer in the cathode material can cooperate with each other, and effectively improve the rate performance and the high-temperature cycle performance of the cathode material.

It can be appreciated that a includes, but is not limited to: 0.89, 0.9, 0.91, 0.92, 0.93, 0.94, 0.95, 0.96, 0.97, and 0.98; b includes, but is not limited to: 0, 0.01, 0.02, 0.03, 0.04, 0.05, and 0.06; c includes, but is not limited to: 0, 0.01, 0.03, 0.05, 0.07, 0.09, and 0.1; d includes, but is not limited to: 0.001, 0.005, 0.01, 0.015, 0.02, 0.025, 0.03, 0.04, and 0.05; m includes, but is not limited to: 0.1, 0.2, 0.3, 0.4, 0.5, 0.6, 0.7, 0.8, 0.9, and 1; and n includes, but is not limited to: 0.1, 0.2, 0.3, 0.4, 0.5, 0.6, 0.7, 0.8, 0.9, and 1.

In some embodiments, the Q element further includes at least one of Sr, Ti, Sb, W, Nb, Y, Mo, Ta, La, B, P and S. Thus, it is beneficial to further improve the structural stability of the cathode material, so as to further improve the rate performance and the high-temperature cycle performance of the cathode material.

In some embodiments, (1-n)/n<0.2. The Co element and the X element are controlled to meet the above conditions, which is beneficial to further improve the rate performance of the cathode material.

In some embodiments, the coating layer further includes a material with a chemical formula Li_{m'}X'O₂, where the X' element includes at least one of Al, W, Ti, B and La, and 0<m'≤1. Thus, it is beneficial to further improve the rate performance and the high-temperature cycle performance of the cathode material. It can be appreciated that m' includes, but is not limited to: 0.1, 0.2, 0.3, 0.4, 0.5, 0.6, 0.7, 0.8, 0.9, and 1.

In some embodiments, the cathode material includes a monocrystalline particle, where an inner core of the monocrystalline particle includes a material with a chemical formula LiNiₐ₁Co_{b1}Mn_{c1}Q1_{d1}Q2_{d2}O₂, where Q1 element includes Zr, Q2 element includes at least one of Al, Sr, W, Nb, La and Sb, 0.89≤a1≤0.98, 0≤b1≤0.06, 0≤c1<0.11, d1>0, d2≥0, and a1+b1+c1+d1+d2=1; and
a coating layer of the monocrystalline particles includes a material with a chemical formula Liₘ₁Coₙ₁X1₍₁₋ₙ₁₎O₂, where X1 element includes at least one of Al, W, Ti and B, 0<m1≤1, and 0<n1≤1.

In the above embodiment, the Q1 element is beneficial to improve mechanical stability of a lattice network of a layered structure of the monocrystalline particles; the Q1 element and the Q2 element cooperate with each other, so that structural stability and thermal stability of the monocrystalline particle can be improved; and Co and at least one of Al, W, Ti and B can improve rate performance and high-temperature cycle performance of the monocrystalline particle, so that rate performance and high-temperature cycle performance of the cathode material can be further improved.

It can be appreciated that a1 includes, but is not limited to: 0.89, 0.9, 0.91, 0.92, 0.93, 0.94, 0.95, 0.96, 0.97, and 0.98; b1 includes, but is not limited to: 0, 0.01, 0.02, 0.03, 0.04, 0.05, and 0.06; c1 includes, but is not limited to: 0, 0.01, 0.03, 0.05, 0.07, 0.09, and 0.1; d1 includes, but is not limited to: 0.001, 0.005, 0.01, 0.015, 0.02, 0.025, 0.03, 0.04, and 0.05; d2 includes, but is not limited to: 0.001, 0.005, 0.01, 0.015, 0.02, 0.025, 0.03, 0.04, and 0.05; m1 includes, but is not limited to: 0.1, 0.2, 0.3, 0.4, 0.5, 0.6, 0.7, 0.8, 0.9, and 1; and n1 includes, but is not limited to: 0.1, 0.2, 0.3, 0.4, 0.5, 0.6, 0.7, 0.8, 0.9, and 1.

In some embodiments, a volume average particle size Dv50 of the monocrystalline particles is 2 µm-6 µm. It can be appreciated that the volume average particle size Dv50 of the monocrystalline particles includes, but is not limited to: 2 µm, 3 µm, 4 µm, 5 µm, and 6 µm.

In some embodiments, the inner core of the monocrystalline particles contains the Q2 element, and a molar ratio of the Q1 element to the Q2 element in the inner core of the monocrystalline particles is (1-6):1. Thus, the structural stability and the thermal stability of the monocrystalline particles can be improved, so that the high-temperature cycle performance of the cathode material can be further improved. It can be appreciated that the above molar ratio includes, but is not limited to: 1:1, 2:1, 3:1, 4:1, 5:1, and 6:1. Further, the inner core of the monocrystalline particles contains the Q2 element, and a molar ratio of the Q1 element to the Q2 element in the inner core of the monocrystalline particles is (1-5):1.

In some embodiments, a sum of mass contents of the Q1 element and the Q2 element in the inner core of the monocrystalline particle is 3,000 ppm-6,000 ppm. Thus, the high-temperature cycle performance of the monocrystalline particles can be further improved, so that the high-temperature cycle performance of the cathode material can be further improved. It can be appreciated that the sum of the mass contents of the Q1 element and the Q2 element in the inner core of the monocrystalline particles includes, but is not limited to: 3,000 ppm, 3,500 ppm, 4,000 ppm, 4,500 ppm, 5,000 ppm, 5,500 ppm, and 6,000 ppm.

In some embodiments, (1-n1)/n1<0.2. Thus, the rate performance of the monocrystalline particle can be further improved, so that the rate performance of the cathode material can be further improved.

In some embodiments, a mass content of the Co element in the monocrystalline particles is ≤8%. Thus, the high-temperature cycle performance of the cathode material can be further improved. It can be appreciated that the mass content of the Co element in the monocrystalline particles includes, but is not limited to: 0.5%, 1%, 1.5%, 2%, 3%, 4%, 5%, 6%, 7%, and 8%. Further, the mass content of the Co element in the monocrystalline particle is ≤6%.

In some embodiments, the coating layer of the monocrystalline particles further includes a material with a chemical formula LiX2O₂, where the X2 element includes at least one of Al, W, Ti and B. Thus, it is beneficial to further improve the rate performance and the high-temperature cycle performance of the monocrystalline particles, so that the rate performance and the high-temperature cycle performance of the cathode material are further improved.

In some embodiments, a sum of mass contents of the Co element and the X2 element in the coating layer of the monocrystalline particles is 0.5%-3%. The sum of the mass contents of the Co element and the X2 element in the coating layer of the monocrystalline particles meets the above condition, which can further improve the high-temperature cycle performance of the monocrystalline particles, so that the high-temperature cycle performance of the cathode material can be further improved. It can be appreciated that the sum of the mass contents of the Co element and the X2 element in the coating layer of the monocrystalline particles includes, but is not limited to: 0.5%, 1%, 1.5%, 2%, 2.5%, and 3%.

In some embodiments, the cathode material further includes polycrystalline particles.

In some embodiments, a ratio of a volume average particle size Dv50 of the polycrystalline particles to the volume average particle size Dv50 of the monocrystalline particles is (3-5.5): 1. The polycrystalline particles and the monocrystalline particles are matched in such a way that monocrystalline particles can fill gaps between polycrystalline particles, thus improving a space utilization rate of the cathode material, and further improving a compaction density of a cathode plate and an energy density of a battery. It can be appreciated that the ratio of the volume average particle size Dv50 of the polycrystalline particles to the volume average particle size Dv50 of the monocrystalline particles includes, but is not limited to: 3:1, 3.5:1, 4:1, 4.5:1, 5:1, and 5.5:1.

In some embodiments, a molar percentage of the Ni element in non-Li metal elements in the monocrystalline particles ≥ a molar percentage of the Ni element in non-Li metal elements in the polycrystalline particles - 1%. With such design, discharge capacities of the monocrystalline particles and polycrystalline particles can be made to be substantially at the same level, thus reducing situations of non-uniform deintercalation/intercalation of Li⁺ in the cathode material after multiple times of charging and discharging, so as to improve long-term stability of the cathode material.

In some embodiments, a mass of the monocrystalline particles accounts for 20%-80% of the cathode material. With the above design, the monocrystalline particles can be uniformly dispersed around the polycrystalline particles, so as to increase a contact area between cathode materials, and alleviate the problem of poor rate performance of the cathode material; the monocrystalline particles can fill gaps between the polycrystalline particles, so as to improve the compaction density and a plate ductility of the cathode material, thus improving an energy density and processability of a battery; the monocrystalline particles and the polycrystalline particles are blended, so that adhesion performance between material particles can be improved, and the polycrystalline particles or the monocrystalline particles can be effectively prevented from falling off the cathode plate or between the cathode materials; the monocrystalline particles can alleviate problems of poor thermal stability and poor cycle performance of polycrystalline materials, so that the long-term cycle life of the cathode material can be further increased. It can be appreciated that the mass of the monocrystalline particles accounts for, but not limited to, 20%, 30%, 40%, 50%, 60%, 70%, or 80% of the cathode material.

In some embodiments, the volume average particle size Dv50 of the polycrystalline particles is 9 µm-15 µm. It can be appreciated that the volume average particle size Dv50 of the polycrystalline particles includes, but is not limited to: 9 µm, 10 µm, 11 µm, 12 µm, 13 µm, 14 µm, and 15 µm.

In some embodiments, an inner core of the polycrystalline particle includes a material with a chemical formula LiNiₐ₂Co_{b2}Mn_{c2}Q3_{d3}Q4_{d4}O₂, where Q3 element includes Al, Q4 element includes at least one of Zr, Sr, Sb, W, Y, Ta, Nb, B, P and S, 0.89≤a2≤0.98, 0≤b2≤0.06, 0≤c2<0.11, d3>0, d4≥0, and a2+b2+c2+d3+d4=1; and

a coating layer of the polycrystalline particles includes a material with a chemical formula Liₘ₂X3ₘ₂X4₍₁₋ₙ₂₎O₂, where X3 element includes B, X4 element includes at least one of Al, W, Ti and La, 0<m2≤1, and 0<n2<1.

In the above embodiment, the Q3 element and the Q4 element in the inner core of the polycrystalline particles can stabilize a transition metal layer structure of the polycrystalline particles and refine primary particles, can improve rate performance and pressure resistance of secondary particles, meanwhile improve a Li⁺ transmission rate, and improve exhibition of capacity of the cathode material; the X3 element and the X4 element in the coating layer of the polycrystalline particles can improve the Li⁺ transmission rate, and meanwhile enhance interface stability of the material, and reduce corrosion and damage of the electrolytic solution to the cathode material, so that the rate performance and the high-temperature cycle performance of the polycrystalline particles are improved, and thus the rate performance and the high-temperature cycle performance of the cathode material can be further improved.

It can be appreciated that a2 includes, but is not limited to: 0.89, 0.9, 0.91, 0.92, 0.93, 0.94, 0.95, 0.96, 0.97, and 0.98; b2 includes, but is not limited to: 0, 0.01, 0.02, 0.03, 0.04, 0.05, and 0.06; c2 includes, but is not limited to: 0, 0.01, 0.03, 0.05, 0.07, 0.09, and 0.1; d3 includes, but is not limited to: 0.001, 0.005, 0.01, 0.015, 0.02, 0.025, 0.03, 0.04, and 0.05; d4 includes, but is not limited to: 0.001, 0.005, 0.01, 0.015, 0.02, 0.025, 0.03, 0.04, and 0.05; m2 includes, but is not limited to: 0.1, 0.2, 0.3, 0.4, 0.5, 0.6, 0.7, 0.8, 0.9, and 1; and n2 includes, but is not limited to: 0.1, 0.2, 0.3, 0.4, 0.5, 0.6, 0.7, 0.8, and 0.9.

In some embodiments, based on a mass of the polycrystalline particles, a mass content of the coating layer of the polycrystalline particles is 0.1%-0.5%. Thus, it is beneficial to further improve the rate performance and the high-temperature cycle performance of the cathode material. It can be appreciated that the above mass content includes, but is not limited to: 0.1%, 0.2%, 0.3%, 0.4%, and 0.5%.

In some embodiments, the inner core of the polycrystalline particles contains the Q4 element, and a molar ratio of the Q3 element to the Q4 element in the inner core of the polycrystalline particles is (0.22-4):1. Thus, the rate performance and the cycle performance of the polycrystalline particles can be further improved. It can be appreciated that, the above molar ratio includes, but is not limited to: 0.22:1, 0.5:1, 1:1, 1.5:1, 2:1, 2.5:1, 3:1, 3.5:1, and 4:1. Optionally, a sum of mass contents of the Q3 element and the Q4 element in the inner core of the polycrystalline particles is 3,500 ppm-12,000 ppm.

In some embodiments, a mass ratio of the X3 element to the X4 element in the coating layer of the polycrystalline particles is (0.25-2):1. Thus, the rate performance and the cycle performance of the polycrystalline particles can be further improved. It can be appreciated that, the above mass ratio includes, but is not limited to: 0.25:1, 0.5:1, 0.75:1, 1:1, 1.5:1, and 2:1.

Another embodiment of the present application provides a preparation method for a cathode material, including following steps:
mixing a cathode material precursor, a lithium source and a Q element-containing compound, and performing first calcination to obtain an inner core, where the Q element includes at least one of Zr and Al; and
mixing the inner core with an X element-containing compound, and performing second calcination, to form a coating layer on at least part of a surface of the inner core, to obtain a cathode material, where the X element includes at least one of Al, W, Ti, B and La.

The cathode material includes the inner core and the coating layer, where the inner core includes a material with a chemical formula LiNiₐCo_{b}Mn_{c}Q_{d}O₂, where 0.89≤a≤0.98, 0≤b≤0.06, 0≤c<0.11, d>0, and a+b+c+d=1, and the coating layer includes a material with a chemical formula LiₘCoₙX₍₁₋ₙ₎O₂, where 0<m≤1, and 0<n≤1.

The above preparation method is simple and convenient, and facilitates batch production of the cathode material. In the above embodiment, the Q element in the inner core can improve oxygen-fixation ability of a transition metal layer of the cathode material, so that structural stability of the cathode material can be improved; the material with the chemical formula LiₘCoₙX₍₁₋ₙ₎O₂ in the coating layer can form a Li⁺ fast transmission region and an interface stabilization region on the surface of the inner core, enhance interface stability of the cathode material, and reduce corrosion and damage to the cathode material by substances such as HF in an electrolytic solution in an early stage of battery charging and discharging. Therefore, the inner core and the coating layer in the cathode material can cooperate with each other, and effectively improve rate performance and the high-temperature cycle performance of the cathode material.

In some embodiments, after the step of the first calcination, the method further includes: performing washing treatment and drying treatment in sequence on a material obtained by the first calcination, to obtain the inner core.

In some embodiments, the cathode material precursor includes a material with a chemical formula LiNiₐ₀Co_{b0}Mn_{c0}(OH)₂, where 0.89≤a0≤0.98, 0≤b0≤0.06, 0≤c0<0.11, and a0+b0+c0=1.

In some embodiments, the first calcination and the second calcination are each independently performed in an oxygen-containing atmosphere.

In some embodiments, process conditions of the first calcination include: a calcination temperature of 730 °C-820 °C, and a calcination duration of 11 h-16 h. It can be appreciated that the calcination temperature includes, but is not limited to: 730°C, 750°C, 770°C, 790°C, 800°C, and 820°C, and the calcination duration includes, but is not limited to: 11 h, 12 h, 13 h, 14 h, 15 h, and 16 h.

In some embodiments, process conditions of the second calcination include: a calcination temperature of 260 °C-660 °C, and a calcination duration of 5 h-10 h. It can be appreciated that the calcination temperature includes, but is not limited to: 260 °C, 300 °C, 400 °C, 500 °C, 600 °C, and 660 °C, and the calcination duration includes, but is not limited to: 5 h, 6 h, 7 h, 8 h, 9 h, and 10 h.

In some embodiments, the Q element-containing compound includes at least one of a Q element-containing oxide, a Q element-containing chloride, a Q element-containing fluoride and a Q element-containing hydroxide. Optionally, the Q element-containing hydroxide includes aluminum hydroxide.

In some embodiments, the X element-containing compound includes at least one of an X element-containing oxide, an X element-containing carbonate and an X element-containing hydroxide.

In some embodiments, the lithium source includes at least one of lithium hydroxide, lithium carbonate, lithium nitrate, lithium oxide, lithium oxalate and lithium peroxide.

By regulating and controlling parameter conditions of the above preparation method, the cathode material provided in an embodiment of the present application can be obtained.

A further embodiment of the present application provides a cathode plate, including at least one of the above cathode material of the present application and a cathode material prepared by the above preparation method of the present application.

The cathode plate includes a cathode current collector and a cathode active material layer located on at least one side of the cathode current collector, where the cathode active material layer includes a cathode active material, a conductive agent and a binder. The cathode active material includes at least one of the above cathode material or a cathode material prepared by the above preparation method, and the conductive agent and the binder can be a conductive agent and a binder commonly used in the art.

A further embodiment of the present application further provides a secondary battery, including the above cathode plate of the present application.

The above secondary battery may include, for example, the above cathode plate of the present application, an anode plate, an electrolytic solution and a separator. The separator is provided between the cathode plate and the anode plate, mainly functions to preventing a short circuit of the cathode and the anode and meanwhile allowing active ions to pass therethrough. The electrolytic solution plays a role in conducting active ions between the cathode plate and the anode plate. During charging and discharging of the secondary battery, the active ions are intercalated and deintercalated back and forth between the cathode plate and the anode plate. The present application has no special limitation on the anode plate, the electrolytic solution and the separator, and an anode plate, an electrolytic solution and a separator prepared by preparation methods commonly used in the art are used, or an anode plate, an electrolytic solution and a separator commonly used in the art can be used. Optionally, the above secondary battery includes a lithium-ion battery.

Further, still another embodiment of the present application further provides an electric device, including the above battery of the present application.

The electric device may include any apparatus or device with a secondary battery as a driving source, such as a mobile phone, a notebook computer, an electric vehicle, a ship, a satellite, an energy storage apparatus, and an intelligent household appliance, but is not limited thereto.

In order to further illustrate the present application, the technical solution of the present application will be described in detail below in conjunction with specific examples. Examples, for which specific techniques or conditions are not specified, are carried out according to techniques or conditions described in documents in the art or according to product specifications. If manufacturers of reagents or instruments used are not specified, they are all conventional products commercially available.

### Example 1-1

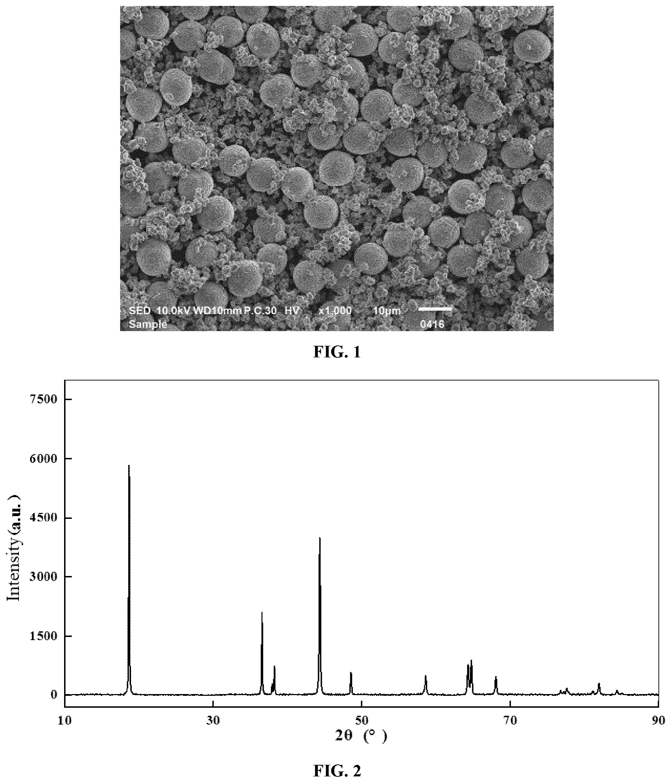

A preparation method for a cathode material included following steps:
S1:
   (1) preparing a polycrystalline particle precursor (with a chemical formula LiNi_{0.94}Mn_{0.06}(OH)₂), lithium hydroxide, Al₂O₃, and ZrO₂ in a molar ratio of 1:0.40:0.002:0.003 (Al₂O₃ and ZrO₂ were calculated in sequence according to molar amounts of Al element and Zr element) and then mixing uniformly, roasting the mixture at 780 °C under a condition of oxygen concentration >70% for 15 h, then pulverizing and sieving, to obtain an intermediate product A, with a chemical formula LiNi_{0.935}Mn_{0.06}Al_{0.002}Zr_{0.003}O₂;
   (2) fully mixing the intermediate product A with clear water in a mass ratio of 6:4, washing for 3 min, and then drying at 150 °C for 120 min, to obtain an inner core of a polycrystalline particles; and
   (3) fully mixing the inner core of the polycrystalline particles, H₃BO₃ and Al₂O₃ in a mass ratio of 1:0.001:0.001 (H₃BO₃ and Al₂O₃ were calculated in sequence according to masses of B element and Al element), and roasting at 300 °C for 8 h, to obtain the polycrystalline particles (polycrystalline cathode material), where a volume average particle size Dv50 thereof was 13 µm, the polycrystalline particle included a uniform coating layer Li₃BO₃, an island-shaped coating layer Al₂O₃+LiAlO₂ and an inner core LiNi_{0.935}Mn_{0.06}Al_{0.002}Zr_{0.003}O₂; a molar ratio of the Al element to the Zr element in the inner core of the polycrystalline particles was 0.67:1, and a sum of mass contents of the Al element and the Zr element in the inner core of the polycrystalline particles was 5,000 ppm; a mass ratio of the B element to the Al element in the coating layer of the polycrystalline particles was 1:1; and based on a mass of the polycrystalline particles, a mass content of the coating layer of the polycrystalline particles was 0.2%.
S2:
   (1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.936}Mn_{0.06}Al_{0.001}Zr_{0.003}O₂; and
   (2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.936}Mn_{0.06}Al_{0.001}Zr_{0.003}O₂. A molar ratio of the Zr element to the Al element in the inner core of the monocrystalline particles was 3:1, a sum of mass contents of the Zr element and the Al element in the inner core of the monocrystalline particles was 4,000 ppm; and a mass content of the Co element in the monocrystalline particles was 1%.
S3: proportioning the polycrystalline particles in step S1 and the monocrystalline particles in step S2 in a mass ratio of 7:3, and then mixing uniformly, to obtain a bimodal cathode material, where an SEM image thereof is as shown in FIG. 1, and an XRD chart thereof is as shown in FIG. 2.

### Example 1-2

A preparation method for a cathode material included following steps:
(1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.936}Mn_{0.06}Al_{0.001}Zr_{0.003}O₂; and
(2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.936}Mn_{0.06}Al_{0.001}Zr_{0.003}O₂. A molar ratio of the Zr element to the Al element in the inner core of the monocrystalline particles was 3:1, a sum of mass contents of the Zr element and the Al element in the inner core of the monocrystalline particles was 4,000 ppm; and a mass content of the Co element in the monocrystalline particles was 1%.

### Example 2-1

It was substantially the same as Example 1-1, but was different in that the preparation method for polycrystalline particles in step S1 was changed.

The preparation method for polycrystalline particles provided in the present example included following steps:
S1:
   (1) preparing a polycrystalline particle precursor (with a chemical formula LiNi_{0.94}Mn_{0.06}(OH)₂), lithium hydroxide, Al₂O₃, and ZrO₂ in a molar ratio of 1:0.480:0.005:0.001 (Al₂O₃ and ZrO₂ were calculated in sequence according to molar amounts of Al element and Zr element) and then mixing uniformly, roasting the mixture at 780 °C under a condition of oxygen concentration >70% for 15 h, then pulverizing and sieving, to obtain an intermediate product A, with a chemical formula LiNi_{0.035}Mn_{0.06}Al_{0.005}Zr_{0.001}O₂;
   (2) fully mixing the intermediate product A with clear water in a mass ratio of 6:4, washing for 3 min, and then drying at 150 °C for 120 min, to obtain an inner core of polycrystalline particles; and
   (3) fully mixing the inner core of the polycrystalline particles, H₃BO₃ and Al₂O₃ in a mass ratio of 1:0.001:0.001 (H₃BO₃ and Al₂O₃ were calculated in sequence according to masses of B element and Al element), and roasting at 300 °C for 8 h, to obtain the polycrystalline particles (polycrystalline cathode material), where a volume average particle size Dv50 thereof was 13 µm, the polycrystalline particles included a uniform coating layer Li₃BO₃, an island-shaped coating layer Al₂O₃+LiAlO₂ and an inner core LiNi_{0.934}Mn_{0.06}Al_{0.005}Zr_{0.001}O₂; a molar ratio of the Al element to the Zr element in the inner core of the polycrystalline particles was 5:1, and a sum of mass contents of the Al element and the Zr element in the inner core of the polycrystalline particles was 6,000 ppm; a mass ratio of the B element to the Al element in the coating layer of the polycrystalline particles was 1:1; and based on a mass of the polycrystalline particles, a mass content of the coating layer of the polycrystalline particles was 0.2%.

### Example 3-1

It was substantially the same as Example 1-1, but was different in that the preparation method for polycrystalline particles in step S1 was changed.

The preparation method for polycrystalline particles provided in the present example included following steps.

S1: (1) preparing a polycrystalline particle precursor (with a chemical formula LiNi_{0.94}Mn_{0.06}(OH)₂), lithium hydroxide, Al₂O₃, and ZrO₂ in a molar ratio of 1:0.40:0.002:0.003 (Al₂O₃ and ZrO₂ were calculated in sequence according to molar amounts of Al element and Zr element) and then mixing uniformly, roasting the mixture at 780 °C under a condition of oxygen concentration >70% for 15 h, then pulverizing and sieving, to obtain an intermediate product A, with a chemical formula LiNi_{0.935}Mn_{0.06}Al_{0.002}Zr_{0.003}O₂;

(2) fully mixing the intermediate product A with clear water in a mass ratio of 6:4, washing for 3 min, and then drying at 150 °C for 120 min, to obtain an inner core of polycrystalline particles; and

(3) fully mixing the inner core of the polycrystalline particles, H₃BO₃ and Al₂O₃ in a mass ratio of 1:0.0015:0.0005 (H₃BO₃ and Al₂O₃ were calculated in sequence according to masses of B element and Al element), and roasting at 320 °C for 8 h, to obtain the polycrystalline particle (polycrystalline cathode material), where a volume average particle size Dv50 thereof was 13 µm, the polycrystalline particles included a uniform coating layer Li₃BO₃, an island-shaped coating layer Al₂O₃+LiAlO₂ and the inner core LiNi_{0.935}Mn_{0.06}Al_{0.002}Zr_{0.003}O₂; a molar ratio of the Al element to the Zr element in the inner core of the polycrystalline particles was 0.67:1, and a sum of mass contents of the Al element and the Zr element in the inner core of the polycrystalline particles was 5,000 ppm; a mass ratio of the B element to the Al element in the coating layer of the polycrystalline particles was 3:1; and based on a mass of the polycrystalline particles, a mass content of the coating layer of the polycrystalline particles was 0.2%.

Example 4-1

It was substantially the same as Example 1-1, but was different in that the preparation method for monocrystalline particles in step S2 was changed.

The preparation method for monocrystalline particles provided in the present example included following steps:
(1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.006:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.933}Mn_{0.06}Al_{0.001}Zr_{0.006}O₂; and
(2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.933}Mn_{0.06}Al_{0.001}Zr_{0.006}O₂. A molar ratio of the Zr element to the Al element in the inner core of the monocrystalline particle was 6:1, a sum of mass contents of the Zr element and the Al element in the inner core of the monocrystalline particles was 7,000 ppm; and a mass content of the Co element in the monocrystalline particles was 1%.

### Example 4-2

A preparation method for a cathode material included following steps:
(1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.006:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.933}Mn_{0.06}Al_{0.001}Zr_{0.006}O₂; and
(2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.933}Mn_{0.06}Al_{0.001}Zr_{0.006}O₂. A molar ratio of the Zr element to the Al element in the inner core of the monocrystalline particles was 6:1, a sum of mass contents of the Zr element and the Al element in the inner core of the monocrystalline particles was 7,000 ppm; and a mass content of the Co element in the monocrystalline particles was 1%.

### Example 5-1

It was substantially the same as Example 1-1, but was different in that the preparation method for monocrystalline particles in step S2 was changed.

The preparation method for monocrystalline particles provided in the present example included following steps:
(1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.936}Mn_{0.06}Al_{0.001}Zr_{0.003}O₂; and
(2) fully mixing the inner core of the monocrystalline particles, Co(OH)₂ and Al₂O₃ in a mass ratio of 1:0.08:0.001 (Co(OH)₂ and Al₂O₃ were calculated in sequence according to masses of Co element and W element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.936}Mn_{0.06}Al_{0.001}Zr_{0.003}O₂. A molar ratio of the Zr element to the Al element in the inner core of the monocrystalline particles was 3:1, a sum of mass contents of the Zr element and the Al element in the inner core of the monocrystalline particles was 6,000 ppm; and a mass content of the Co element in the monocrystalline particles was 8%.

### Example 5-2

A preparation method for a cathode material included following steps:
(1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.936}Mn_{0.06}Al_{0.001}Zr_{0.003}O₂; and
(2) fully mixing the inner core of the monocrystalline particles, Co(OH)₂ and Al₂O₃ in a mass ratio of 1:0.08:0.001 (Co(OH)₂ and Al₂O₃ were calculated in sequence according to masses of Co element and W element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.936}Mn_{0.06}Al_{0.001}Zr_{0.003}O₂. A molar ratio of the Zr element to the Al element in the inner core of the monocrystalline particles was 3:1, a sum of mass contents of the Zr element and the Al element in the inner core of the monocrystalline particles was 6,000 ppm; and a mass content of the Co element in the monocrystalline particles was 8%.

### Example 6-1

A preparation method for a cathode material included following steps:
S1:
   (1) preparing a polycrystalline particle precursor (with a chemical formula LiNi_{0.92}Co_{0.05}Mn_{0.03}(OH)₂), lithium hydroxide, Al₂O₃, and ZrO₂ in a molar ratio of 1:0.40:0.001:0.003 (Al₂O₃ and ZrO₂ were calculated in sequence according to molar amounts of Al element and Zr element) and then mixing uniformly, roasting the mixture at 760 °C under a condition of oxygen concentration >70% for 15 h, then pulverizing and sieving, to obtain an intermediate product A, with a chemical formula LiNi_{0.916}Co_{0.050}Mn_{0.030}Al_{0.001}Zr_{0.003}O₂;
   (2) fully mixing the intermediate product A with clear water in a mass ratio of 6:4, washing for 3 min, and then drying at 150 °C for 120 min, to obtain an inner core of polycrystalline particles; and
   (3) fully mixing the inner core of the polycrystalline particles, H₃BO₃ and Al₂O₃ in a mass ratio of 1:0.001:0.001 (H₃BO₃ and Al₂O₃ were calculated in sequence according to masses of B element and Al element), and roasting at 300 °C for 8 h, to obtain the polycrystalline particles (polycrystalline cathode material), where a volume average particle size Dv50 thereof was 10 µm, the polycrystalline particles included a uniform coating layer Li₃BO₃, an island-shaped coating layer Al₂O₃+LiAlO₂ and the inner core LiNi_{0.916}Co_{0.050}Mn_{0.030}Al_{0.001}Zr_{0.003}O₂; a molar ratio of the Al element to the Zr element in the inner core of the polycrystalline particles was 0.33:1, and a sum of mass contents of the Al element and the Zr element in the inner core of the polycrystalline particles was 4,000 ppm; a mass ratio of the B element to the Al element in the coating layer of the polycrystalline particles was 1:1; and based on a mass of the polycrystalline particles, a mass content of the coating layer of the polycrystalline particles was 0.2%.
S2:
   (1) preparing a monocrystalline particle precursor (with a chemical formula LiNi_{0.93}Co_{0.05}Mn_{0.02}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.926}Co_{0.050}Mn_{0.020}Al_{0.001}Zr_{0.003}O₂; and
   (2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.926}Co_{0.050}Mn_{0.020}Al_{0.001}Zr_{0.003}O₂. A molar ratio of the Zr element to the Al element in the inner core of the monocrystalline particles was 3:1, a sum of mass contents of the Zr element and the Al element in the inner core of the monocrystalline particles was 4,000 ppm; and a mass content of the Co element in the monocrystalline particles was 1%.
S3: proportioning the polycrystalline particles in step S1 and the monocrystalline particles in step S2 in a mass ratio of 7:3, and then mixing uniformly, to obtain a bimodal cathode material.

### Example 7-1

A preparation method for a cathode material included following steps:
S1:
   (1) preparing a polycrystalline particle precursor (with a chemical formula LiNi_{0.90}Co_{0.05}Mn_{0.05}(OH)₂), lithium hydroxide, Al₂O₃, and ZrO₂ in a molar ratio of 1:0.40:0.001:0.003 (Al₂O₃ and ZrO₂ were calculated in sequence according to molar amounts of Al element and Zr element) and then mixing uniformly, roasting the mixture at 760 °C under a condition of oxygen concentration >70% for 15 h, then pulverizing and sieving, to obtain an intermediate product A, with a chemical formula LiNi_{0.896}Co_{0.050}Mn_{0.050}Al_{0.001}Zr_{0.003}O₂;
   (2) fully mixing the intermediate product A with clear water in a mass ratio of 6:4, washing for 3 min, and then drying at 150 °C for 120 min, to obtain an inner core of polycrystalline particles; and
   (3) fully mixing the inner core of the polycrystalline particles, H₃BO₃ and Al₂O₃ in a mass ratio of 1:0.001:0.001 (H₃BO₃ and Al₂O₃ were calculated in sequence according to masses of B element and Al element), and roasting at 300 °C for 8 h, to obtain the polycrystalline particles (polycrystalline cathode material), where a volume average particle size Dv50 thereof was 10 µm, the polycrystalline particles included a uniform coating layer Li₃BO₃, an island-shaped coating layer Al₂O₃+LiAlO₂ and an inner core LiNi_{0.896}Co_{0.050}Mn_{0.050}Al_{0.001}Zr_{0.003}O₂; a molar ratio of the Al element to the Zr element in the inner core of the polycrystalline particles was 0.33:1, and a sum of mass contents of the Al element and the Zr element in the inner core of the polycrystalline particles was 4,000 ppm; a mass ratio of the B element to the Al element in the coating layer of the polycrystalline particle was 1:1; and based on a mass of the polycrystalline particles, a mass content of the coating layer of the polycrystalline particles was 0.2%.
S2:
   (1) preparing a monocrystalline particle precursor (with a chemical formula LiNi_{0.93}Co_{0.05}Mn_{0.02}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an inner core of monocrystalline particles, with a chemical formula LiNi_{0.926}Co_{0.050}Mn_{0.020}Al_{0.001}Zr_{0.003}O₂; and
   (2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.926}Co_{0.050}Mn_{0.020}Al_{0.001}Zr_{0.003}O₂. A molar ratio of the Zr element to the Al element in the inner core of the monocrystalline particle was 3:1, a sum of mass contents of the Zr element and the Al element in the inner core of the monocrystalline particles was 4,000 ppm; and a mass content of the Co element in the monocrystalline particles was 1%.
S3: proportioning the polycrystalline particles in step S1 and the monocrystalline particles in step S2 in a mass ratio of 7:3, and then mixing uniformly, to obtain a bimodal cathode material.

### Comparative Examples 1-1

A preparation method for a cathode material included following steps:
S1:
   (1) preparing a polycrystalline particle precursor (with a chemical formula LiNi_{0.94}Mn_{0.06}(OH)₂) and lithium hydroxide in a molar ratio of 1:0.480 and then mixing uniformly, roasting the mixture at 780 °C under a condition of oxygen concentration >70% for 15 h, then pulverizing and sieving, to obtain an intermediate product A, with a chemical formula LiNi_{0.94}Mn_{0.06}O₂;
   (2) fully mixing the intermediate product A with clear water in a mass ratio of 6:4, washing for 3 min, and then drying at 150 °C for 120 min, to obtain an inner core of polycrystalline particles; and
   (3) fully mixing the inner core of the polycrystalline particles with H₃BO₃ and Al₂O₃ in a mass ratio of 1:0.001:0.001 (H₃BO₃ and Al₂O₃ were calculated in sequence according to masses of B element and Al element), and roasting at 300 °C for 8 h, to obtain the polycrystalline particles (polycrystalline cathode material), where a volume average particle size Dv50 thereof was 13 µm, the polycrystalline particles included a uniform coating layer Li₃BO₃, an island-shaped coating layer Al₂O₃+LiAlO₂ and the inner core LiNi_{0.94}Mn_{0.06}O₂; a mass ratio of the B element to the Al element in the coating layer of the polycrystalline particles was 1:1; and based on a mass of the polycrystalline particles, a mass content of the coating layer of the polycrystalline particles was 0.2%.
S2:
   (1) preparing a monocrystalline particle precursor (with a chemical formula LiNi_{0.94}Mn_{0.06}(OH)₂) and lithium hydroxide in a molar ratio of 1:0.460 and then mixing uniformly, roasting the mixture at 830 °C under a condition of oxygen concentration >70% for 14 h, then pulverizing and sieving, to obtain an inner core of monocrystalline particles, with a chemical formula LiNi_{0.94}Mn_{0.06}O₂; and
   (2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.94}Mn_{0.06}O₂. A mass content of the Co element in the monocrystalline particles was 1%.
S3: proportioning the polycrystalline particles in step S1 and the monocrystalline particles in step S2 in a mass ratio of 7:3, and then mixing uniformly, to obtain a bimodal cathode material, which included a material with a chemical formula LiNi_{0.94}Mn_{0.06}O₂.

### Comparative Example 1-2

A preparation method for a cathode material included following steps:
(1) preparing a monocrystalline particle precursor (with a chemical formula LiNi_{0.94}Mn_{0.06}(OH)₂) and lithium hydroxide in a molar ratio of 1:0.460 and then mixing uniformly, roasting the mixture at 830 °C under a condition of oxygen concentration >70% for 14 h, then pulverizing and sieving, to obtain an inner core of monocrystalline particles, with a chemical formula LiNi_{0.94}Mn_{0.06}O₂; and
(2) fully mixing the inner core of the monocrystalline particles, Co(OH)₂ and Al₂O₃ in a mass ratio of 1:0.01:0.0005 (Co(OH)₂ and Al₂O₃ were calculated in sequence according to masses of Co element and Al element), and then roasting at 680 °C for 7 h to obtain the monocrystalline particles (monocrystalline cathode material), where a volume average particle size Dv50 thereof was 3 µm, and the monocrystalline particles included LiCoO₂, Al₂O₃, a LiAlO₂ coating layer and the inner core LiNi_{0.94}Mn_{0.06}O₂. A mass content of the Co element in the monocrystalline particles was 1%.

### Comparative Examples 2-1

A preparation method for a cathode material included following steps:
S1:
   (1) preparing a polycrystalline particle precursor (with a chemical formula LiNi_{0.94}Mn_{0.06}(OH)₂), lithium hydroxide, Al₂O₃, and ZrO₂ in a molar ratio of 1:0.40:0.002:0.003 (Al₂O₃ and ZrO₂ were calculated in sequence according to molar amounts of Al element and Zr element) and then mixing uniformly, roasting the mixture at 780 °C under a condition of oxygen concentration >70% for 15 h, then pulverizing and sieving, to obtain an intermediate product A, with a chemical formula LiNi_{0.935}Mn_{0.06}Al_{0.002}Zr_{0.003}O₂;
   (2) fully mixing the intermediate product A with clear water in a mass ratio of 6:4, washing for 3 min, and then drying at 150 °C for 120 min, to obtain an intermediate product B; and
   (3) roasting the intermediate product B at 300 °C for 8 h, to obtain polycrystalline particles LiNi_{0.935}Mn_{0.06}Al_{0.002}Zr_{0.003}O₂, where a volume average particle size Dv50 thereof was 13 µm. A molar ratio of the Al element to the Zr element in the inner core of the polycrystalline particles was 0.67:1, and a sum of mass contents of the Al element and the Zr element in the inner core of the polycrystalline particles was 5,000 ppm.
S2:
   (1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an intermediate product A, with a chemical formula LiNi_{0.936}Mn_{0.06}Al_{0.001}Zr_{0.003}O₂; and (2) roasting the intermediate product A at 680 °C for 7 h to obtain the monocrystalline particles LiNi_{0.936}Mn_{0.06}Al_{0.001}Zr_{0.003}O₂, where a volume average particle size Dv50 thereof was 3 µm. A molar ratio of the Zr element to the Al element in the inner core of the monocrystalline particles was 3:1, and a sum of mass contents of the Zr element and the Al element in the inner core of the monocrystalline particles was 4,000 ppm.
S3: proportioning the polycrystalline particles in step S1 and the monocrystalline particles in step S2 in a mass ratio of 7:3, and then mixing uniformly, to obtain a bimodal cathode material.

### Comparative Examples 2-2

A preparation method for a cathode material included following steps:
(1) preparing a monocrystalline particle precursor (with a chemical formula LiNi_{0.94}Mn_{0.06}(OH)₂), lithium hydroxide, ZrO₂, and Al₂O₃ in a molar ratio of 1:0.460:0.003:0.001 (Al₂O₃ and ZrO₂ were calculated in sequence according to molar amounts of Al element and Zr element) and then mixing uniformly, roasting the mixture at 830 °C under a condition of oxygen concentration >70% for 14 h, then pulverizing and sieving, to obtain an intermediate product A, with a chemical formula LiNi_{0.936}Mn_{0.06}Al_{0.001}Zr_{0.003}O₂; and (2) roasting the intermediate product A at 680 °C for 7 h to obtain the monocrystalline particles (monocrystalline cathode material) LiNi_{0.936}Mn_{0.06}Al_{0.001}Zr_{0.003}O₂, where a volume average particle size Dv50 thereof was 3 µm. A molar ratio of the Zr element to the Al element in the inner core of the monocrystalline particles was 3:1, and a sum of mass contents of the Zr element and the Al element in the inner core of the monocrystalline particles was 4,000 ppm.

### Comparative Examples 3-1

A preparation method for a cathode material included following steps:
S1: (1) preparing a polycrystalline particle precursor (with a chemical formula LiNi_{0.94}Mn_{0.06}(OH)₂) and lithium hydroxide in a molar ratio of 1:0.480 and then mixing uniformly, roasting the mixture at 780 °C under a condition of oxygen concentration >70% for 15 h, then pulverizing and sieving, to obtain an intermediate product A, with a chemical formula LiNi_{0.94}Mn_{0.06}O₂; (2) fully mixing the intermediate product A with clear water in a mass ratio of 6:4, washing for 3 min, and then drying at 150 °C for 120 min, to obtain an intermediate product B; and (3) roasting the intermediate product B at 300 °C for 8 h to obtain the polycrystalline particles LiNi_{0.94}Mn_{0.06}O₂, where a volume average particle size Dv50 thereof was 13 µm;
S2: (1) preparing a monocrystalline particle precursor (with a chemical formula LiNi_{0.94}Mn_{0.06}(OH)₂) and lithium hydroxide in a molar ratio of 1:0.460 and then mixing uniformly, roasting the mixture at 830 °C under a condition of oxygen concentration >70% for 14 h, then pulverizing and sieving, to obtain an intermediate product A, with a chemical formula LiNi_{0.94}Mn_{0.06}O₂; and (2) roasting the intermediate product A at 680 °C for 7 h, to obtain monocrystalline particles LiNi_{0.94}Mn_{0.06}O₂, where a volume average particle size Dv50 thereof was 3 µm; and
S3: proportioning the polycrystalline particles in step S1 and the monocrystalline particles in step S2 in a mass ratio of 7:3, and then mixing uniformly, to obtain a bimodal cathode material.

### Comparative Example 3-2

A preparation method for a cathode material included following steps:
(1) preparing a monocrystalline particle precursor (with a chemical formula LiNi_{0.94}Mn_{0.06}(OH)₂) and lithium hydroxide in a molar ratio of 1:0.460 and then mixing uniformly, roasting the mixture at 830 °C under a condition of oxygen concentration >70% for 14 h, then pulverizing and sieving, to obtain an intermediate product A, with a chemical formula LiNi_{0.94}Mn_{0.06}O₂; and
(2) roasting the intermediate product A at 680 °C for 7 h to obtain the monocrystalline particles LiNi_{0.94}Mn_{0.06}O₂, where a volume average particle size Dv50 thereof was 3 µm.

Components of the cathode materials prepared in various examples and various comparative examples were measured using an ICP-AES (inductively coupled plasma atomic emission spectrometry) tester.

The volume average particle sizes Dv50 of the cathode materials prepared in various examples and various comparative examples were measured using a particle size tester.

Assembly of batteries and test of electrochemical performances

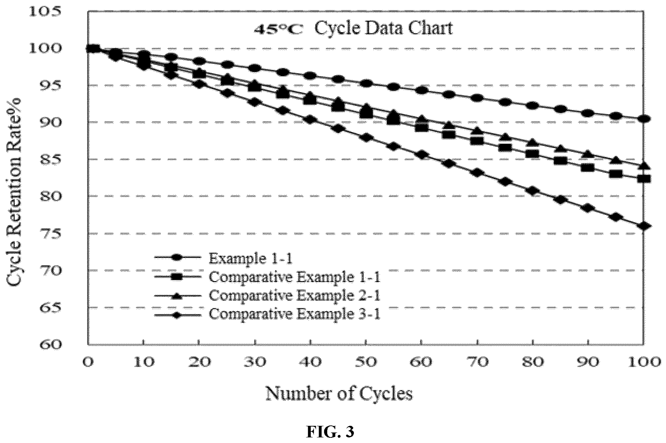

The cathode materials prepared in various examples and comparative examples were prepared into cathode plates, where the cathode plates were prepared according to a mass ratio of cathode material:conductive agent super carbon black:PVDF (polyvinylidene fluoride) = 96.5:2:1.5. The cathode plates were assembled into button batteries with specification model LR2032, and then the rate performance and the high-temperature cycle performance were tested. Test results are shown in TABLE 1, TABLE 2 and FIG. 3.

Test conditions for the rate performance of the button batteries included: 25 °C, charging at 0.1 C, discharging at 1 C, and an operating voltage of 2.5 V-4.25 V vs. Li⁺/Li; 1 C/0.1 C rate (%)=discharge specific capacity under 1 C condition/charge specific capacity under 0.1 C condition × 100%; and

25 °C, charging at 0.1 C, discharging at 3 C, and an operating voltage of 2.5 V-4.25 V vs. Li⁺/Li; 3 C/0.1 C rate (%)=discharge specific capacity under 3 C condition/charge specific capacity under 0.1 C condition × 100%.

Test conditions for the high-temperature cycle performance of the button batteries included: 45 °C, charging the batteries at 0.5 C, discharging at 0.5 C, 100 cycles, an operating voltage of 2.5 V-4.25 V vs. Li⁺/Li, 100-cycle capacity retention rate (%)=discharge specific capacity of 100^{th} cycle/discharge specific capacity of 1^{st} cycle × 100%.

**TABLE 1**

| No. | 1 C/0.1 C Rate (%) | 3 C/0.1 C Rate (%) | 100-cycle Capacity Retention Rate (%) |
|---|---|---|---|
| Example 1-1 | **92.0** | **76.6** | **90.5** |
| Example 2-1 | **91.8** | **76.5** | **88.3** |
| Example 3-1 | **91.6** | **75.5** | **87.6** |
| Example 4-1 | **91.5** | **76.0** | **88.2** |
| Example 5-1 | **90.1** | **72.1** | **86.5** |
| Example 6-1 | **92.6** | **78.3** | **91.2** |
| Example 7-1 | **92.8** | **79.1** | **91.5** |
| Comparative Example 1-1 | **89.6** | **70.5** | **82.7** |
| Comparative Example 2-1 | **85.4** | **68.5** | **84.1** |
| Comparative Example 3-1 | **80.2** | **58.3** | **76.0** |

**TABLE 2**

| No. | 1 C/0.1 C Rate (%) | 3 C/0.1 C Rate (%) | 100-cycle Capacity Retention Rate (%) |
|---|---|---|---|
| Example 1-2 | **91.2** | **72.4** | **91.3** |
| Example 4-2 | **91.6** | **71.8** | **86.2** |
| Example 5-2 | **90.4** | **70.1** | **84.3** |
| Comparative Example 1-2 | **89.4** | **69.2** | **80.3** |
| Comparative Example 2-2 | **80.1** | **62.4** | **82.3** |
| Comparative Example 3-2 | **77.1** | **55.6** | **79.2** |

FIG. 1 is an SEM image of the cathode material prepared in Example 1-1, and as can be seen from FIG. 1, the cathode material of Example 1-1 includes monocrystalline particles and polycrystalline particles, and the monocrystalline particles have a relatively small particle size. FIG. 2 is an XRD chart of the cathode material prepared in Example 1-1, and as can be seen from FIG. 2, no impure phase appears in the cathode material of Example 1-1.

As can be seen from TABLE 1 and FIG. 3, compared with the batteries of Comparative Example 1-1, Comparative Example 2-1 and Comparative Example 3-1, the batteries of Example 1-1 to Example 7-1 of the present application have better rate performance and better high-temperature performance. As can be seen from TABLE 2, compared with the batteries of Comparative Example 1-2, Comparative Example 2-2, and Comparative Example 3-2, the batteries of Example 1-2, Example 4-2, and Example 5-2 of the present application have better rate performance and better cycle performance. As the inner cores of the cathode materials of Comparative Example 1-1 and Comparative Example 1-2 are not doped with a specific element, cathode material formed have poor layered structure stability and remarkably reduced high-temperature cycle retention rate; at the same time, since there is no doping element, Li⁺ conductor is not formed between crystal boundaries, the Li⁺ transmission rate is reduced, and 1 C and 3 C rate performances are reduced. Since the cathode materials prepared in Comparative Example 2-1 and Comparative Example 2-2 are not coated with a specific element, the fast ion transmission region is not formed in a surface layer of the cathode materials, and the 3 C rate performance is remarkably deteriorated; meanwhile, as no coating layer is contained, interface damage is exacerbated during high-temperature cycle, causing remarkably deteriorated high-temperature cycle retention rate. For the cathode materials prepared in Comparative Example 3-1 and Comparative Example 3-2, as neither specific element doping nor interface coating is performed, the structural stability and interface stability of the materials are both greatly deteriorated, and the rate performance and the high-temperature cycle performance are remarkably reduced.

Various technical features of the above examples can be combined at will. For the sake of conciseness of description, not all possible combinations of various technical features in the above examples are described. However, combinations of these technical features, as long as there is no contradiction therebetween, should be all considered as within the scope of the present description.

The above examples are merely several embodiments of the present application, of which the description is relatively specific and detailed, but they should not be thus construed as limitation to the patent scope of the present application. It should be indicated that the ordinarily skilled in the art also could make several modifications and improvements without departing from the concept of the present application, all of which fall within the scope of protection of the present application. Therefore, the scope of protection of the present application for patent should be based on the claims attached, and the description can be used for illustrating the contents of the claims.

## Claims

1. A cathode material, **characterized by** comprising an inner core and a coating layer coated on at least part of a surface of the inner core, wherein the inner core comprises a material with a chemical formula LiNiₐCo_{b}Mn_{c}Q_{d}O₂, wherein Q element comprises at least one of Zr and Al, 0.89≤a≤0.98, 0≤b≤0.06, 0≤c<0.11, d>0, and a+b+c+d=1, and the coating layer comprises a material with a chemical formula LiₘCoₙX₍₁₋ₙ₎O₂, wherein X element comprises at least one of Al, W, Ti, B and La, 0<m≤1, and 0<n≤1.

2. The cathode material according to claim 1, wherein the cathode material has at least one of following characteristics (1)-(3):
(1) the Q element further comprises at least one of Sr, Ti, Sb, W, Nb, Y, Mo, Ta, La, B, P and S;
(2) (1-n)/n<0.2; and
(3) the coating layer further comprises a material with a chemical formula Li_{m'}X'O₂, wherein the X' element comprises at least one of Al, W, Ti, B and La, and 0<m'≤1.

3. The cathode material according to claim 1, wherein the cathode material comprises monocrystalline particles, an inner core of the monocrystalline particles comprises a material with a chemical formula LiNiₐ₁Co_{b1}Mn_{c1}Q1_{d1}Q2_{d2}O₂, wherein Q1 element comprises Zr, Q2 element comprises at least one of Al, Sr, W, Nb, La and Sb, 0.89≤a1≤0.98, 0≤b1≤0.06, 0≤c1<0.11, d1>0, d2≥0, and a1+b1+c1+d1+d2=1; and
a coating layer of the monocrystalline particles comprises a material with a chemical formula Liₘ₁Coₙ₁X1₍₁₋ₙ₁₎O₂, wherein X1 element comprises at least one of Al, W, Ti and B, 0<m1≤1, and 0<n1≤1; and
optionally, a volume average particle size Dv50 of the monocrystalline particles is 2 µm-6 µm.

4. The cathode material according to claim 3, wherein the cathode material has at least one of following characteristics (1)-(4):
(1) the inner core of the monocrystalline particle contains the Q2 element, and a molar ratio of the Q1 element to the Q2 element in the inner core of the monocrystalline particles is (1-6):1, optionally (1-5): 1;
(2) a sum of mass contents of the Q1 element and the Q2 element in the inner core of the monocrystalline particles is 3,000 ppm-6,000 ppm;
(3) (1-n1)/n1<0.2; and
(4) a mass content of a Co element in the monocrystalline particles is ≤8%, optionally ≤6%.

5. The cathode material according to claim 3, wherein the coating layer of the monocrystalline particles further comprises a material with a chemical formula LiX2O₂, wherein X2 element comprises at least one of Al, W, Ti and B; and
optionally, a sum of mass contents of Co element and the X2 element in the coating layer of the monocrystalline particles is 0.5%-3%.

6. The cathode material according to any one of claims 1 to 5, wherein the cathode material further comprises polycrystalline particles;
optionally, a ratio of a volume average particle size Dv50 of the polycrystalline particles to a volume average particle size Dv50 of monocrystalline particles is (3-5.5):1;
optionally, a mass of the monocrystalline particles accounts for 20%-80% of the cathode material; and
optionally, the volume average particle size Dv50 of the polycrystalline particles is 9 µm-15 µm.

7. The cathode material according to claim 6, wherein an inner core of the polycrystalline particles comprises a material with a chemical formula LiNiₐ₂Co_{b2}Mn_{c2}Q3_{d3}Q4_{d4}O₂, wherein Q3 element comprises Al, Q4 element comprises at least one of Zr, Sr, Sb, W, Y, Ta, Nb, B, P and S, 0.89≤a2≤0.98, 0≤b2≤0.06, 0≤c2<0.11,d3>0, d4≥0, and a2+b2+c2+d3+d4=1; and
a coating layer of the polycrystalline particles comprises a material with a chemical formula Liₘ₂X3ₘ₂X4₍₁₋ₙ₂₎O₂, wherein X3 element comprises B, X4 element comprises at least one of Al, W, Ti and La, 0<m2≤1, and 0<n2<1;
optionally, based on a mass of the polycrystalline particles, a mass content of the coating layer of the polycrystalline particles is 0.1%-0.5%;
optionally, the inner core of the polycrystalline particles contains Q4 element, and a molar ratio of the Q3 element to the Q4 element in the inner core of the polycrystalline particles is (0.22-5):1, further optionally (0.22-4):1;
optionally, a sum of mass contents of the Q3 element and the Q4 element in the inner core of the polycrystalline particles is 3,500 ppm-12,000 ppm; and
optionally, a mass ratio of the X3 element to the X4 element in the coating layer of the polycrystalline particles is (0.25-3):1, further optionally (0.25-2):1.

8. A preparation method for a cathode material, **characterized by** comprising steps of:
mixing a cathode material precursor, a lithium source and a Q element-containing compound, and performing first calcination to obtain an inner core, wherein the Q element comprises at least one of Zr and Al; and
mixing the inner core with an X element-containing compound, and performing second calcination, to form a coating layer on at least part of a surface of the inner core, to obtain the cathode material, wherein the X element comprises at least one of Al, W, Ti, B and La,
wherein the cathode material comprises the inner core and the coating layer, wherein the inner core comprises a material with a chemical formula LiNiₐCo_{b}Mn_{c}Q_{d}O₂, wherein 0.89≤a≤0.98, 0≤b≤0.06, 0≤c<0.11, d>0, and a+b+c+d=1, and the coating layer comprises a material with a chemical formula LiₘCoₙX₍₁₋ₙ₎O₂, wherein 0<m≤1, and 0<n≤1.

9. A cathode plate, comprising at least one of the cathode material according to any one of claims 1 to 7 and a cathode material prepared by the preparation method according to claim 8.

10. A secondary battery, comprising the cathode plate according to claim 9.
